# EUROPÄISCHE PATENTSCHRIFT

(11) **EP 1 686 293 B1**
(45) Veröffentlichungstag und Bekanntmachung des Hinweises auf die Patenterteilung: **09.05.2012**
(21) Anmeldenummer: 05100665.8
(22) Anmeldetag: 01.02.2005
(51) Int. Cl.: F16H 61/24

(54) **Schalt-Wähl-Vorrichtung**
Shift select apparatus
Dispositif de sélection et de changement de vitesses

(43) Veröffentlichungstag der Anmeldung: 02.08.2006
(73) Patentinhaber: Getrag Ford Transmissions GmbH, 50735 Köln (DE)
(72) Erfinder: Burckhardt, Markus, 50259 Pulheim-Stommeln (DE)

(56) Entgegenhaltungen:
- EP-A- 0 694 715
- EP-A- 0 999 384
- EP-A- 1 158 222
- EP-A- 1 267 104
- DE-A1- 2 935 590
- DE-A1- 19 520 209
- DE-C1- 10 011 272
- GB-A- 1 494 954
- PATENT ABSTRACTS OF JAPAN Bd. 1996, Nr. 04, 30. April 1996 (1996-04-30) & JP 07 332487 A (AISIN EE I KK), 22. Dezember 1995 (1995-12-22)

## Beschreibung

Die Erfindung betrifft eine Schalt-Wähl-Vorrichtung für ein Getriebe, insbesondere für ein Kraftfahrzeuggetriebe, mit einer eine Wähl- und eine Schaltbewegung ausführenden Schalt-Wähl-Welle, die mittels einer durch die Wählbewegung Kräfte aufnehmenden Rückstellfeder in eine Neutralstellung positionierbar ist.

Aus der DE 29 35 590 A1 ist eine Schalt-Wähl-Vorrichtungen bekannt, bei der die Schalt-Wähl-Welle in einer als Malteserkreuz ausgebildeten Hülse axial verschiebbar ist. In der Hülse sind Nuten vorgesehen, in denen an der Schalt-Wähl-Welle angeordnete Rollen in axialer Richtung der Schalt-Wähl-Welle verfahrbar sind. Durch diese relativ aufwendige und somit teure Konstruktion ist es möglich, die Rückstellfeder, die ortsfest zu einem Gehäuse der Schalt-Wähl-Vorrichtung angeordnet ist, von der in axialer Richtung verlaufenden Schaltbewegung der Schalt-Wähl-Welle zu entkoppeln. Auf diese Weise können auf die Rückstellfeder während der Schaltbewegung der Schalt-Wähl-Welle keine Kräfte wirken.

Die Erfindung hat die Aufgabe den Aufbau der Schalt-Wähl-Vorrichtung der eingangs genannten Art deutlich zu vereinfachen.

Die Erfindung löst die gestellte Aufgabe durch eine Schalt-Wähl-Vorrichtung der eingangs genannten Art, bei der erfindungsgemäß die Rückstellfeder ortsfest zur Schalt-Wähl-Welle angeordnet ist. Durch die ortsfeste Anordnung der Rückstellfeder zur Schalt-Wähl-Welle kann die Rückstellfeder sowohl der Rotationsbewegung beim Wählen als auch der axialen Verschiebung der Schalt-Wähl-Welle folgen. Durch die beiden Freiheitsgrade, auf denen sich die Rückstellfeder nun zukünftig zusammen mit der Schalt-Wähl-Welle bewegen kann, können die bisher erforderlichen Rollen, Nuten und Hülsen entfallen, die bisher erforderlich waren, als die Rückstellfeder ortsfest zum Gehäuse der Schalt-Wähl-Vorrichtung angeordnet war. Somit wird die gesamte Schalt-Wähl-Vorrichtung jetzt erheblich einfacher im Aufbau.

In einer bevorzugten Ausführungsform ist die Rückstellfeder eine Schenkelfeder, deren Schenkel einen an einem Vorrichtungsgehäuse angeordneten Bolzen umgreifen. Wenn bei einer Wählbewegung die Schalt-Wähl-Welle verschwenkt werden muss, liegt einer der Schenkel weiterhin am Bolzen an, während sich der andere Schenkel vom Bolzen abhebt. Sobald ein Fahrer einen Schaltknüppel loslässt wird die Schalt-Wähl-Welle durch den am Bolzen anliegenden Schenkel wieder in ihre Neutralstellung bewegt. Wenn bei einer Schaltbewegung die Schalt-Wähl-Welle axial verschoben wird, so können die beiden den Bolzen umgreifenden Schenkel ebenfalls in axialer Richtung über den Bolzen gleiten. Auf die Schenkel der Schenkelfeder wirkt also in Richtung der axialen Schaltbewegung keine Kraft. Somit ist die Rückstellfeder während der Schaltbewegung von auf sie in Richtung der axialen Schaltbewegung wirkenden Kräften entkoppelt.

Auf einfache konstruktive Weise kann die Rückstellfeder auf einem auf der Schalt-Wähl-Welle sitzenden Schaltblock angeordnet werden. Dann ist die Rückstellfeder ebenfalls ortsfest zur Schalt-Wähl-Welle angeordnet.

In einer bevorzugten Ausführungsform ist die Rückstellfeder mit einem Befestigungselement ortsfest zur Schalt-Wähl-Welle am Schaltblock befestigt. Das Befestigungselement bildet vorteilhafterweise mit der Rückstellfeder einen Formschluss. Somit ist die Rückstellfeder auch ortsfest zum Schaltblock angeordnet.

In einer besonders einfachen Ausführungsvariante kann das Befestigungselement ein Teller sein, an dem sich ein durch eine im Schaltblock vorgesehene Öffnung steckbarer Bolzen befindet.

Damit der Bolzen am Schaltblock befestigt werden kann, kann er an seinem freien Ende eine Arretierung aufweisen.

Wenn die Arretierung ein Clip-Element ist, kann das als Teller ausgebildete Befestigungselement mit einem Handgriff am Schaltblock montiert werden.

In einer anderen Ausführungsvariante kann der Bolzen des als Teller ausgebildeten Befestigungselements an seinem freien Ende in den Schaltblock eingepresst werden. Auch diese Ausführungsform eignet sich gut für eine schnelle Montage.

Der Bolzen kann an einen Bereich angrenzen, dessen Durchmesser auf den Abstand der Schenkel der Schenkelfeder abgestimmt ist. Folglich liegen die Schenkel der Schenkelfeder ohne Spiel an dem an den Bolzen angrenzenden Bereich an. Dadurch wird ein optimales Rückstellverhalten beim Loslassen des Schaltknüppels in die Neutralstellung gewährleistet. Außerdem kann sich die Schenkelfeder nicht relativ zum Schaltblock verdrehen.

Zweckmäßigerweise weist der Schaltblock im Bereich eines Federsitzes für die Schenkelfeder einen reduzierten Durchmesser auf. Dadurch kann die Schenkelfeder zuverlässig in einer gewünschten Position auf dem Schaltblock montiert werden.

Der Schaltblock kann mit zwei zueinander parallel angeordneten Nocken versehen sein, zwischen denen ein mit einer Schaltmasse verbundener Mitnehmer eingreift. Wenn der Schaltblock zusammen mit der Schalt-Wähl-Welle axial verschoben wird, so erfährt der Mitnehmer ebenfalls eine Axialbewegung, wodurch die Schaltmasse verschwenkt wird. Wenn der Schaltblock zusammen mit der Schalt-Wähl-Welle verschwenkt wird, so gleiten die Nocken am Mitnehmer entlang, sodass die Schaltmasse nicht betätigt wird.

In einer bevorzugten Ausführungsform kann an der Schaltmasse ein Betätigungskabel zum Ausführen einer Schaltbewegung fixiert sein. Dann kann das Getriebe auch weiter weg vom Motor an einer Stelle platziert sein, die mit einem Schaltgestänge nur schlecht oder gar nicht erreichbar ist.

Aus demselben Grund ist es möglich an einem Umlenkhebel für die Wählbewegung ein Betätigungskabel zum Ausführen einer Wählbewegung zu fixieren.

Wenn die Schalt-Wähl-Vorrichtung nachrüstbar ist, können auch schon bestehende Getriebe mit ihr ausgerüstet werden.

Außerdem betrifft die Erfindung ein Getriebe, das erfindungsgemäß eine Schalt-Wähl-Vorrichtung nach einem der Ansprüche 1 bis 14 aufweist.

Nachfolgend wird ein Ausführungsbeispiel einer erfindungsgemäßen Schalt-Wähl-Vorrichtung anhand der beiliegenden Zeichnungen näher erläutert.

Im Einzelnen zeigen:
- Fig. 1: eine Rückansicht auf eine erfindungsgemäße Schalt-Wähl-Vorrichtung;
- Fig. 2: eine perspektivische Draufsicht auf einen Schaltblock aus Fig. 1;
- Fig.3: eine perspektivische Draufsicht auf den Schaltblock mit Rückstellfeder und Befestigungselement;
- Fign. 4 u. 5: eine perspektivische Draufsicht auf ein als Teller ausgebildetes Befestigungselement;
- Fig. 6: eine perspektivische Draufsicht auf einen Zusammenbau der Schalt-Wähl-Welle mit dem Schaltblock und der Rückstellfeder mit Befestigungselement.

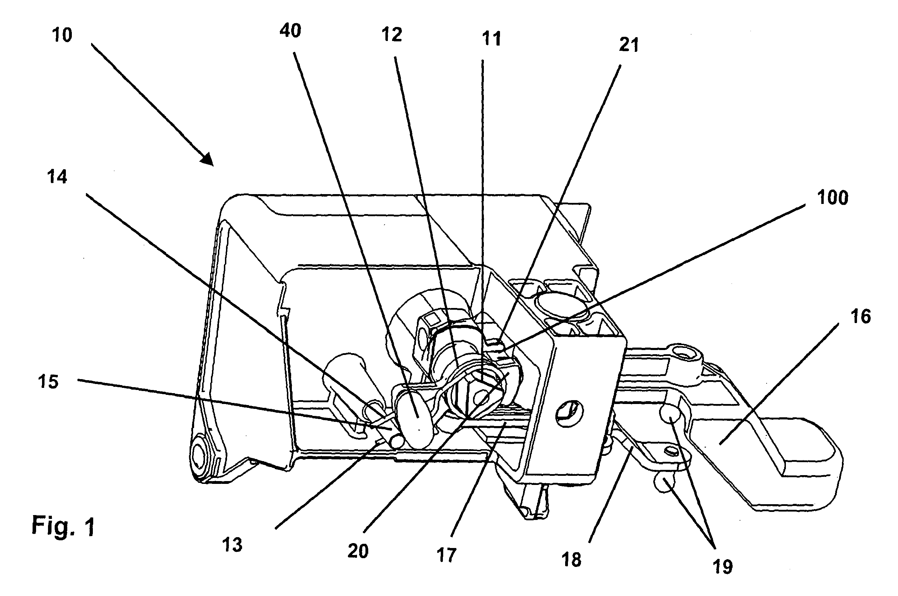

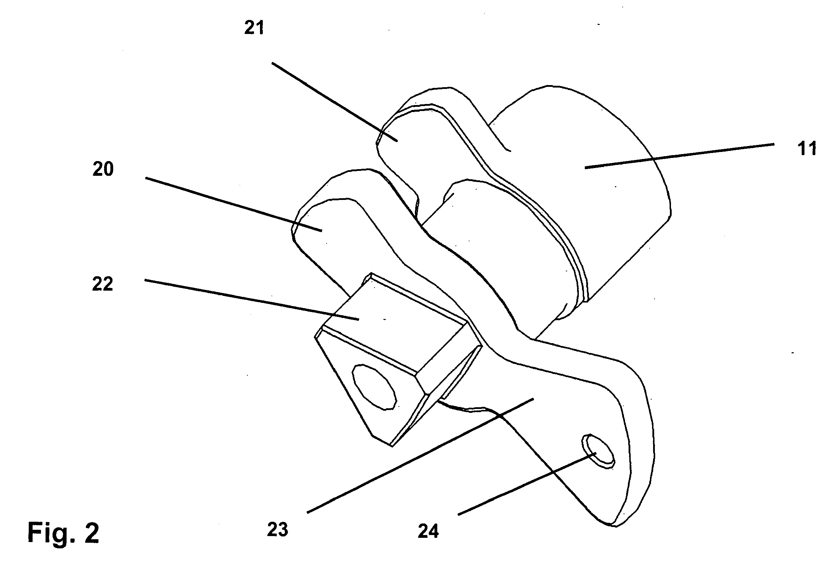

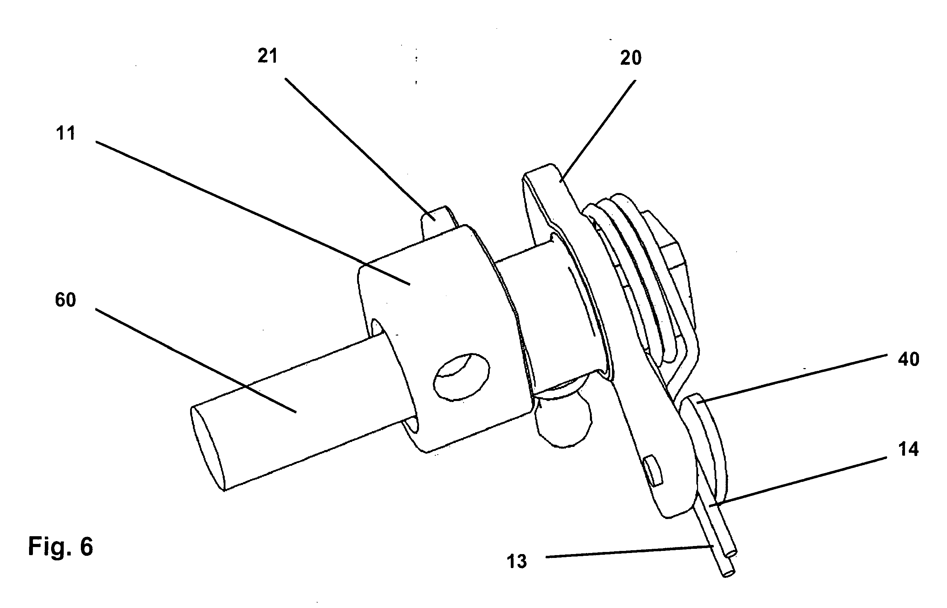

Fig. 1 zeigt eine Schalt-Wähl-Vorrichtung 10 zum Wählen und Schalten von Gängen eines Kraftfahrzeuggetriebes. Die Schalt-Wähl-Vorrichtung 10 weist einen Schaltblock 11 auf, der auf einer Schalt-Wähl-Welle 60 sitzt (siehe auch Fign. 2, und 6). Auf dem Schaltblock 11 ist eine Schenkelfeder 12 angeordnet. Die Schenkelfeder 12 umgreift mit ihren Schenkeln 13 und 14 einen Bolzen 15. Der Schaltblock 11 weist parallel zueinander angeordnete Nocken 20 und 21 auf (siehe auch Fig. 2), zwischen denen ein Mitnehmer 100, der mit einer Schaltmasse 16 verbunden ist, angeordnet ist. Unterhalb des Schaltblockes 11 ist eine Zug-Druck-Stange 17 angeordnet, die mit dem Schaltblock 11 verbunden ist. An die Zug-Druck-Stange schließt sich ein Umlenkhebel 18 ein. An der Schaltmasse 16 und an dem Umlenkhebel 18 sind Kugelköpfe 19 angeordnet, in die jeweils ein hier nicht gezeigtes Betätigungskabel eingehängt werden kann. Grundsätzlich kann die erfindungsgemäße Schalt-Wähl-Vorrichtung 10 aber auch mit einem Schaltgestänge betrieben werden. Die erfindungsgemäße Schalt-Wähl-Vorrichtung 10 kann sowohl innerhalb als auch außerhalb eines Getriebegehäuses positioniert werden.

Um einen Gang zu wählen wird über das Betätigungskabel der Umlenkhebel 18 und damit auch die Zug-Druck-Stange 17 betätigt, wodurch der Schaltblock 11 und die mit ihm verbundenen Schalt-Wähl-Welle 60 verschwenkt werden. Wenn der Schaltblock 11 und die Schalt-Wähl-Welle 60 im Uhrzeigersinn verschwenkt werden, so wird der Schenkel 13 gegen den Bolzen 15 gedrückt und der Schenkel 14 hebt sich vom Bolzen 15 ab. Sobald der Fahrer den Schaltknüppel loslässt, werden der Schaltblock 11 und die Schalt-Wähl-Welle 60 durch den gegen den Bolzen 15 drückenden Schenkel 13 wieder in die Neutralstellung zurück bewegt. Wenn der Schaltblock 11 und die Schalt-Wähl-Welle 60 gegen den Uhrzeigersinn verschwenkt werden, so wird der Schenkel 14 gegen den Bolzen 15 gedrückt und der Schenkel 13 hebt sich vom Bolzen 15 ab. Der Schenkel 14 bewegt dann nach dem Loslassen des Schaltknüppels den Schaltblock 11 und die Schalt-Wähl-Welle 60 wieder in die Neutralstellung.

Wenn der Fahrer einen Gang gewählt hat und anschließend den Gang schaltet, werden der Schaltblock 11 und die Schalt-Wähl-Welle 60 durch die Schaltmasse 16 und den mit ihr verbundenen zwischen die Nocken 20 und 21 eingreifenden Mitnehmer 100 in axialer Richtung der Schalt-Wähl-Welle 60 bewegt. Dann gleiten die beiden Schenkel 13 und 14 der Schenkelfeder 12 auf dem Bolzen 15 entlang.

Durch das Abgleiten der Schenkel 13 und 14 auf dem Bolzen 15 kann die Schenkelfeder 12 über ihre Schenkel 13 und 14 in axialer Richtung der Schalt-Wähl-Welle 60 keine Kräfte aufnehmen. Die Schenkelfeder 12 ist somit von auf sie in axialer Richtung der Schalt-Wähl-Welle 60 wirkenden Kräften während der axialen Schaltbewegung der Schalt-Wähl-Welle 60 entkoppelt.

Der Schaltblock 11 weist einen Federsitz 22, der als ein Absatz mit reduziertem Durchmesser ausgebildet ist, auf. Somit kann die Schenkelfeder 12 zuverlässig auf dem Schaltblock in der gewünschten Position montiert werden.

Ferner weist der Schaltblock 11 an einem Steg 23 eine Öffnung 24 auf, in der ein als ein Teller 40 oder 50 ausgebildetes Befestigungselement (siehe Fign. 2, 3, 4, 5 und 6) eingesteckt werden kann. Die Teller 40 und 50 weisen einen Bolzen 41 und 51 auf, mit welchen sie in die Öffnung 24 am Schaltblock 11 eingesteckt werden können (siehe Fig. 2).

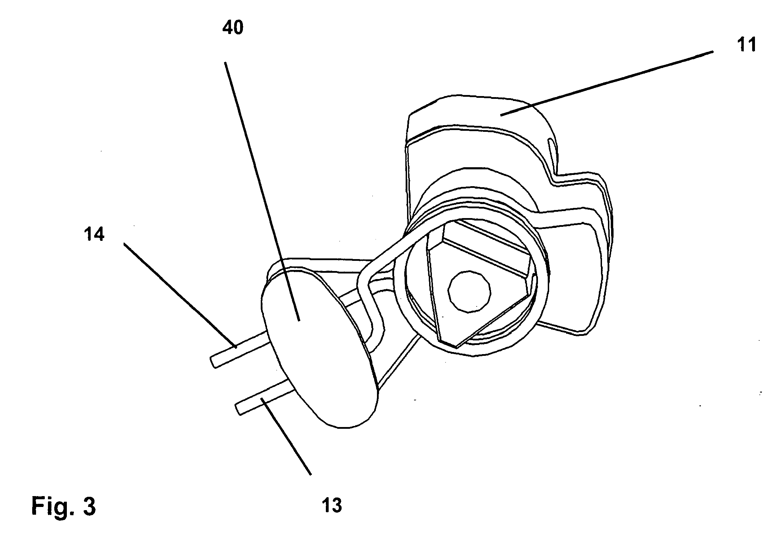

Ferner grenzen die Bolzen 41 und 51 an einen Bereich 42 und 52 an, dessen Durchmesser auf den Abstand der Schenkel 13 und 14 der Schenkelfeder 12 abgestimmt ist. Dadurch können die Schenkel 13 und 14 ohne Spiel an den Bereichen 42 und 52 anliegen (siehe Fign. 3, 4, 5 und 6). Durch die spielfreie Anlage der Schenkel 13 und 14 an den Bereichen 42 und 52 wird ein optimales Rückstellverhalten beim Loslassen des Schaltknüppels in die Neutralstellung sichergestellt. Außerdem kann sich die Schenkelfeder 12 durch die spielfreie Anlage der Schenkel 13 und 14 an die Bereiche 42 und 52 nicht relativ zum Schaltblock 11 verdrehen.

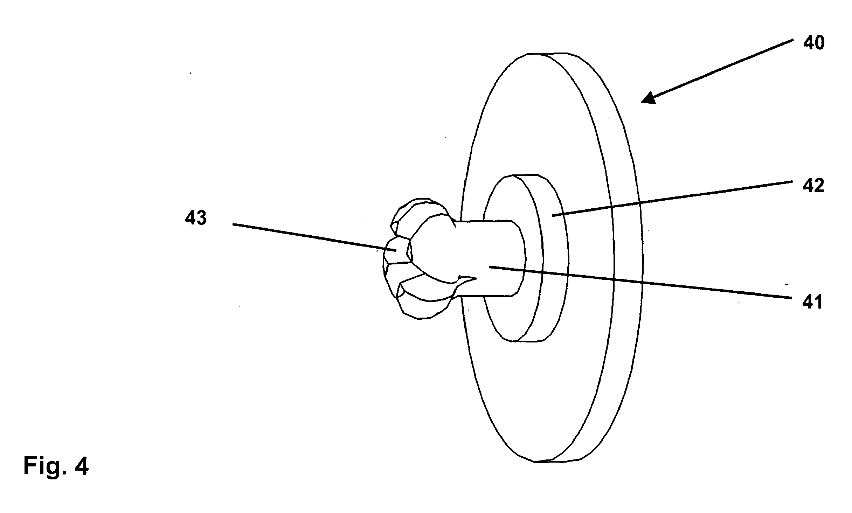

Der Teller 40 weist am freien Ende des Bolzens 41 ein Clip-Element 43 zur Arretierung des Tellers 40 am Schaltblock 11 auf (siehe Fig. 4).

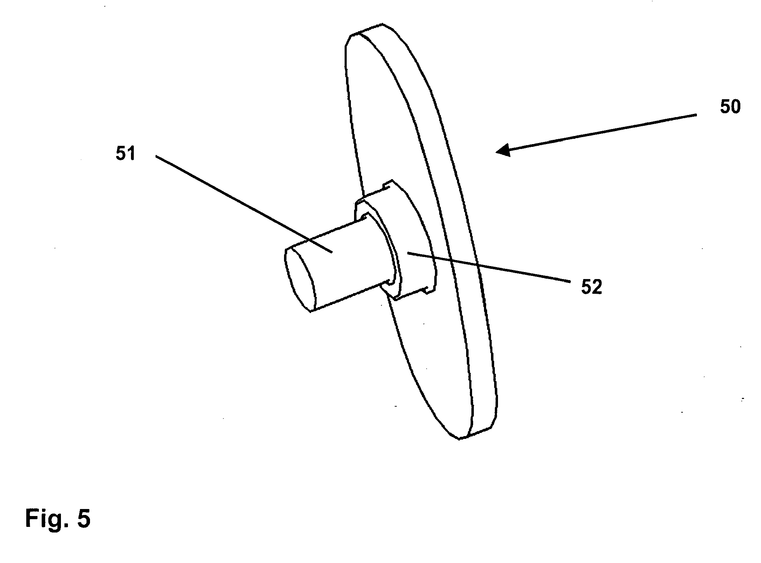

Dahingegen kann der Teller 50 mit dem freien Ende des Bolzens 51 in die Öffnung 24 am Schaltblock 11 eingepresst werden (siehe Fig. 5).

### BEZUGSZEICHENLISTE

- 10.: Schalt-Wähl-Vorrichtung
- 11.: Schaltblock
- 12.: Schenkel Feder
- 13.: Schenkel
- 14.: Schenkel
- 15.: Bolzen
- 16.: Schaltmasse
- 17.: Zug-Druck-Stange
- 18.: Umlenkhebel
- 19.: Kugelkopf
- 100.: Mitnehmer

- 20.: Nocken
- 21.: Nocken
- 22.: Federsitz
- 23.: Steg
- 24.: Öffnung

- 40.: Teller
- 41.: Bolzen
- 42.: Bereich
- 43.: Clip-Element

- 50.: Teller
- 51.: Bolzen
- 52.: Bereich

- 60.: Schalt-Wähl-Welle

## Patentansprüche

1. Schalt-Wähl-Vorrichtung (10) für ein Getriebe, insbesondere für ein Kraftfahrzeuggetriebe, mit einer eine Wähl- und eine Schaltbewegung ausführenden Schalt-Wähl-Welle (60), die mittels einer durch die Wählbewegung Kräfte aufnehmenden Rückstellfeder in eine Neutralstellung positionierbar ist und wobei die Rückstellfeder eine Schenkelfeder (12) ist, deren Schenkel (13, 14) einen an einem Vorrichtungsgehäuse angeordneten Bolzen (15) umgreifen,
**dadurch gekennzeichnet, dass** die Rückstellfeder ortsfest zur Schalt-Wähl-Welle (60) angeordnet ist.

2. Schalt-Wähl-Vorrichtung (10) nach Anspruch 1,
**dadurch gekennzeichnet, dass** die Rückstellfeder auf einem auf der Schalt-Wähl-Welle (60) sitzenden Schaltblock (11) angeordnet ist.

3. Schalt-Wähl-Vorrichtung (10) nach einem der Ansprüche 1 bis 2,
**dadurch gekennzeichnet, dass** die Rückstellfeder mit einem Befestigungselement ortsfest zur Schalt-Wähl-Welle (60) am Schaltblock (11) befestigt ist.

4. Schalt-Wähl-Vorrichtung (10) nach Anspruch 3,
**dadurch gekennzeichnet, dass** das Befestigungselement ein Teller (40, 50) ist, an dem sich ein durch eine im Schaltblock (11) vorgesehene Öffnung (24) steckbarer Bolzen (41, 51) befindet.

5. Schalt-Wähl-Vorrichtung (10) nach Anspruch 4
**dadurch gekennzeichnet, dass** der Bolzen (41, 51) an seinem freien Ende eine Arretierung aufweist.

6. Schalt-Wähl-Vorrichtung (10) nach Anspruch 5,
**dadurch gekennzeichnet, dass** die Arretierung ein Clip-Element (43) ist.

7. Schalt-Wähl-Vorrichtung (10) nach Anspruch 5,
**dadurch gekennzeichnet, dass**derBolzen(51)anseinem freien Ende in den Schaltblock (11) einpressbar ist.

8. Schalt-Wähl-Vorrichtung (10) nach einem der Ansprüche 4 bis 7,
**dadurch gekennzeichnet, dass** der Bolzen (41, 51) an einen Bereich (42, 52) angrenzt, dessen Durchmesser auf den Abstand der Schenkel (13, 14) der Schenkelfeder (12) abgestimmt ist.

9. Schalt-Wähl-Vorrichtung (10) nach einem der Ansprüche 2 bis 8,
**dadurch gekennzeichnet, dass** der Schaltblock (11) im Bereich eines Federsitzes (22) für die Schenkelfeder (12) einen reduzierten Durchmesser aufweist.

10. Schalt-Wähl-Vorrichtung (10) nach einem der Ansprüche 1 bis 9,
**dadurch gekennzeichnet, dass** der Schaltblock (11) mit zwei parallel zueinander angeordneten Nocken (20, 21) versehen ist, zwischen denen ein mit einer Schaltmasse (16) verbundener Mitnehmer (100) eingreift.

11. Schalt-Wähl-Vorrichtung (10) nach einem der Ansprüche 1 bis 10,
**dadurch gekennzeichnet, dass** an der Schaltmasse (16) ein Betätigungskabel zum Ausführen einer Schaltbewegung fixierbar ist.

12. Schalt-Wähl-Vorrichtung (10) nach einem der Ansprüche 1 bis 11,
**dadurch gekennzeichnet, dass** an einem Umlenkhebel (18) für die Wählbewegung ein Betätigungskabel zum Ausführen einer Wählbewegung fixierbar ist.

13. Schalt-Wähl-Vorrichtung (10) nach einem der Ansprüche 1 bis 12,
**dadurch gekennzeichnet, dass** sie nachrüstbar ist.

14. Getriebe, insbesondere für ein Kraftfahrzeug,
**dadurch gekennzeichnet, dass** es eine Schalt-Wähl-Vorrichtung (10) nach einem der Ansprüche 1 bis 13 aufweist.

## Claims

1. Shift selector apparatus (10) for a gearbox, in particular for a motor vehicle gearbox, having a shift selector shaft (60) which performs a selection movement and a shift movement and which can be positioned into a neutral position by means of a restoring spring which absorbs forces as a result of the selection movement, and wherein the restoring spring is a leg spring (12), the legs (13, 14) of which engage around a pin (15) arranged on a device housing,
**characterized in that** the restoring spring is arranged in a positionally fixed manner with respect to the shift selector shaft (60).

2. Shift selector apparatus (10) according to Claim 1,
**characterized in that** the restoring spring is arranged on a shift block (11) seated on the shift selector shaft (60).

3. Shift selector apparatus (10) according to either of Claims 1 and 2,
**characterized in that** the restoring spring is fastened with a fastening element to the shift block (11) in a positionally fixed manner with respect to the shift selector shaft (60).

4. Shift selector apparatus (10) according to Claim 3,
**characterized in that** the fastening element is a plate (40, 50) on which is situated a pin (41, 51) which can be inserted through an orifice (24) provided in the shift block (11).

5. Shift selector apparatus (10) according to Claim 4,
**characterized in that** the pin (41, 51) has a locking means on its free end.

6. Shift selector apparatus (10) according to Claim 5,
**characterized in that** the locking means is a clip element (43).

7. Shift selector apparatus (10) according to Claim 5,
**characterized in that** the pin (51) can be pressed, at its free end, into the shift block (11).

8. Shift selector apparatus (10) according to one of Claims 4 to 7, **characterized in that** the pin (41, 51) adjoins a region (42, 52) whose diameter is matched to the spacing between the legs (13, 14) of the leg spring (12).

9. Shift selector apparatus (10) according to one of Claims 2 to 8,
**characterized in that** the shift block (11) has a reduced diameter in the region of a spring seat (22) for the leg spring (12).

10. Shift selector apparatus (10) according to one of Claims 1 to 9,
**characterized in that** the shift block (11) is provided with two cams (20, 21) which are arranged parallel to one another and between which engages a driver (100) which is connected to a shift mass (16).

11. Shift selector apparatus (10) according to one of Claims 1 to 10,
**characterized in that** an actuating cable for performing a shift movement can be fixed to the shift mass (16).

12. Shift selector apparatus (10) according to one of Claims 1 to 11,
**characterized in that** an actuating cable for performing a selection movement can be fixed to a deflecting lever (18) for the selection movement.

13. Shift selector apparatus (10) according to one of Claims 1 to 12,
**characterized in that** it can be retrofitted.

14. Gearbox, in particular for a motor vehicle,
**characterized in that** it has a shift selector apparatus (10) according to one of Claims 1 to 13.

## Revendications

1. Dispositif de sélection et de changement de vitesses (10) pour une transmission, en particulier pour une transmission de véhicule automobile, comprenant un arbre de sélection et de changement de vitesses (60) qui effectue un mouvement de sélection et un mouvement de changement de vitesses et qui peut être positionné dans une position neutre au moyen d'un ressort de rappel recevant des forces par le mouvement de sélection, et le ressort de rappel étant un ressort à branches (12) dont les branches (13, 14) viennent en prise autour d'une cheville (15) disposée sur un boîtier du dispositif,
**caractérisé en ce que** le ressort de rappel est disposé de manière fixe par rapport à l'arbre de sélection et de changement de vitesses (60).

2. Dispositif de sélection et de changement de vitesses (10) selon la revendication 1,
**caractérisé en ce que** le ressort de rappel est disposé sur un bloc de changement de vitesses (11) reposant sur l'arbre de sélection et de changement de vitesses (60).

3. Dispositif de sélection et de changement de vitesses (10) selon la revendication 1 ou 2,
**caractérisé en ce que** le ressort de rappel est fixé au bloc de changement de vitesses (11) de manière fixe par rapport à l'arbre de sélection et de changement de vitesses (60) à l'aide d'un élément de fixation.

4. Dispositif de sélection et de changement de vitesses (10) selon la revendication 3,
**caractérisé en ce que** l'élément de fixation est un plateau (40, 50) sur lequel se situe une cheville (41, 51) qui peut être enfichée à travers une ouverture (24) prévue dans le bloc de changement de vitesses (11).

5. Dispositif de sélection et de changement de vitesses (10) selon la revendication 4,
**caractérisé en ce que** la cheville (41, 51) comprend un dispositif de blocage au niveau de son extrémité libre.

6. Dispositif de sélection et de changement de vitesses (10) selon la revendication 5, **caractérisé en ce que** le dispositif de blocage est un élément d'attache (43).

7. Dispositif de sélection et de changement de vitesses (10) selon la revendication 5,
**caractérisé en ce que** la cheville (51), au niveau de son extrémité libre, peut être enfoncée dans le bloc de changement de vitesses (11).

8. Dispositif de sélection et de changement de vitesses (10) selon l'une quelconque des revendications 4 à 7,
**caractérisé en ce que** la cheville (41, 51) est adjacente à une région (42, 52) dont le diamètre est adapté à l'écartement des branches (13, 14) du ressort à branches (12).

9. Dispositif de sélection et de changement de vitesses (10) selon l'une quelconque des revendications 2 à 8,
**caractérisé en ce que** le bloc de changement de vitesses (11) présente un diamètre réduit dans la région d'un siège de ressort (22) pour le ressort à branches (12).

10. Dispositif de sélection et de changement de vitesses (10) selon l'une quelconque des revendications 1 à 9,
**caractérisé en ce que** le bloc de changement de vitesses (11) est pourvu de deux cames (20, 21) qui sont disposées de manière parallèle l'une à l'autre et entre lesquelles vient en prise un dispositif d'entraînement (100) relié à une masse de changement de vitesses (16).

11. Dispositif de sélection et de changement de vitesses (10) selon l'une quelconque des revendications 1 à 10,
**caractérisé en ce qu'**un levier d'actionnement pour effectuer un mouvement de changement de vitesses peut être fixé à la masse de changement de vitesses (16).

12. Dispositif de sélection et de changement de vitesses (10) selon l'une quelconque des revendications 1 à 11,
**caractérisé en ce qu'**un câble d'actionnement pour effectuer un mouvement de sélection peut être fixé à un levier de renvoi (18) pour le mouvement de sélection.

13. Dispositif de sélection et de changement de vitesses (10) selon l'une quelconque des revendications 1 à 12,
**caractérisé en ce qu'**il peut être monté en rattrapage.

14. Transmission, en particulier pour un véhicule automobile,
**caractérisée en ce qu'**elle comprend un dispositif de sélection et de changement de vitesses (10) selon l'une quelconque des revendications 1 à 13.
